# EUROPEAN PATENT SPECIFICATION

(11) **EP 3 187 324 B1**
(45) Date of publication and mention of the grant of the patent: **05.08.2020**
(21) Application number: 16196474.7
(22) Date of filing: 28.10.2016
(51) Int. Cl.: B29C 49/02, B29C 49/42, B29C 49/46, B29C 49/06, B29C 49/36, B29L 31/00

(54) **DECONTAMINATING UNIT FOR DECONTAMINATING PARISONS MADE OF A THERMOPLASTIC MATERIAL AND MOLDING APPARATUS FOR MOLDING CONTAINERS STARTING FROM PARISONS MADE OF A THERMOPLASTIC MATERIAL**
DEKONTAMINATIONSEINHEIT FÜR KUNSTSTOFFVORFORMLINGE UND GERÄT ZUM BLASFORMEN VON BEHÄLTERN AUS KUNSTSTOFFVORFORMLINGE.
UNITÉ DE DÉCONTAMINATION POUR PRÉFORMES EN MATIÈRE PLASTIQUE ET APPAREIL DE MOULAGE POUR FORMER DES RÉCIPIENTS À PARTIR DE PRÉFORMES EN MATIÈRE PLASTIQUE.

(30) Priority: 30.12.2015 IT UB20159786
(43) Date of publication of application: 05.07.2017
(73) Proprietor: Gea Procomac S.p.A., 43038 Sala Baganza (PR) (IT)
(72) Inventor: ABELLI, Paolo, 43123 Parma (IT)
(74) Representative: Dondi, Silvia

(56) References cited:
- DE-A1-102007 017 938
- DE-A1-102013 101 642
- FR-A1- 3 002 455
- US-A1- 2011 285 063
- US-A1- 2012 292 827

## Description

The present invention relates to a decontaminating unit for decontaminating parisons made of a thermoplastic material and moulding apparatus for moulding containers starting from parisons made of a thermoplastic material.

The reference sector is the bottling of so-called "sensitive" food products, i.e. products that are particularly sensitive to bacteriological contamination and oxidation, such as, for example, isotonic drinks, juices, nectars, soft drinks, tea, milk-based drinks, coffee-based drinks, etc., for which the prevention of possible microbiological contamination throughout all packaging stages is of fundamental importance.

In particular, the invention was initially conceived for packaging ESL ("Extended Shelf Life") products through "ultraclean" technology in which only the steps of filling and closing the (previously sterilized) containers take place in a controlled atmosphere. In these applications, the decontamination treatments especially concentrate on the inside of containers (or parisons) and on capsules.

ESL products are free from preservatives and do not have physical/chemical or organoleptic stability at room temperature.

Their extended shelf life is guaranteed by storage at low temperatures ("cold chain"), typically 2°- 4°C, which inhibits microbial growth.

To improve their shelf life, hygienic filling conditions and decontamination treatments for containers, particularly for their inside surfaces, can also be provided.

The performance of the sterilization/decontamination of the containers is expressed by the decimal reduction that the sterilization/decontamination treatment can exert on a reference micro-organism.

While in aseptic lines from four to six decimal reductions are required according to the type of product to be packaged, ultraclean lines have more relaxed performance requirements for the sterilization of the packaging.

In aseptic technology the use of UV radiations is known for activating a chemical agent previously applied to the neck of the parison (see document US2005/0118057) and the use of pulsed light lamps arranged in proximity to the neck of the parison to break the covalent bond between the two oxygen atoms of the hydrogen peroxide deposited there (Italian patent application No. PR2011A000024 in the name of the Applicant).

Whereas UV radiation is emitted continuously, pulsed light consists of emitting flashes at a determined frequency. Pulsed light has an important percentage on the UV spectrum, but the applied power values are higher than for traditional UV radiation therefore the sterilization performance is better.

With reference to ESL applications, on the other hand, to guarantee effective decontamination, UV radiation emitters are used, designed to penetrate into the containers.

The limit of these penetrating emitters is connected both with the structural complexity since they are designed to be inserted into the containers, and with the difficulty to reach all the surfaces to be treated. In fact, in bottles with a complex geometry, shaded zones can be created, i.e. zones not treated or partially treated by the radiation.

In document WO2014/131680, the source of UV radiations is external to the parison and placed above the mouth. A semi-circular reflector and a focusing element are used to make the radiations converge within the parison, preventing their dispersion.

The source, the reflector and the focusing element form a decontaminating device.

Along a rotary carousel there are two (or more) treatment stations, each formed by two decontaminating devices arranged tangentially to the advancement circumference of the parisons.

The two devices of the same station perform the treatment with different wavelengths so as to destroy different varieties of micro-organisms, or every station performs the treatment on different internal surface areas of the preforms.

Other known decontamination units are described in documents FR-A-3002455, US2011/0285063A1 and DE10 2007 017 938A1.

In this context, the technical task underpinning the present invention is to provide a decontaminating unit for decontaminating parisons made of a thermoplastic material and moulding apparatus for moulding containers starting from parisons made of a thermoplastic material, which obviate the drawbacks of the prior art cited above.

In particular, an object of the present invention is to provide a decontaminating unit for decontaminating parisons made of a thermoplastic material and moulding apparatus for moulding containers starting from parisons made of a thermoplastic material, having less structural complexity with respect to the known solutions.

The stated technical task and specified aims are substantially achieved by a decontaminating unit for decontaminating parisons made of a thermoplastic material, comprising:
- a rotary carousel;
- a gripping means for gripping the parisons, solidly constrained to the rotary carousel and arranged such as to support the parisons during the advancement thereof along a circumferential pathway on the rotary carousel;
- a generating device for generating pulsed light, arranged along a secant of the circumferential pathway in order to send radiations onto the mouth of the parisons in transit.

In particular, the generating unit for generating pulsed light comprises at least a pulsed light lamp arranged in such a way as to send radiations towards the mouth of the parisons.

Preferably, the generating device for generating pulsed light comprises a box container for housing the pulsed light lamp. The box container is provided with a slit having a prevalent extension that is parallel to the secant.

Preferably, the generating device for generating pulsed light comprises a reflecting element placed within the box container.

Preferably, the gripping means is operatively active only on a predefined zone of the neck of the parisons.

For example, the gripping means comprises pliers operatively active on the predefined zone of the neck of the parisons. Alternatively, the gripping means comprises housing cells for housing the parisons, fashioned in the rotary carousel.

The stated technical task and specified aims are substantially achieved by a moulding apparatus for moulding containers starting from parisons made of a thermoplastic material, comprising:
- a heating unit for heating parisons;
- a stretch-blowing unit for stretch-blowing the parisons;
- the decontaminating unit for decontaminating parisons proposed herein, which is interposed between the heating unit and the stretch-blowing unit.

Further characteristics and advantages of the present invention will more fully emerge from the indicative, and hence non-limiting, description of a preferred but not exclusive embodiment of a decontaminating unit for decontaminating parisons made of a thermoplastic material and moulding apparatus for moulding containers starting from parisons made of a thermoplastic material, as illustrated in the accompanying drawings, in which:

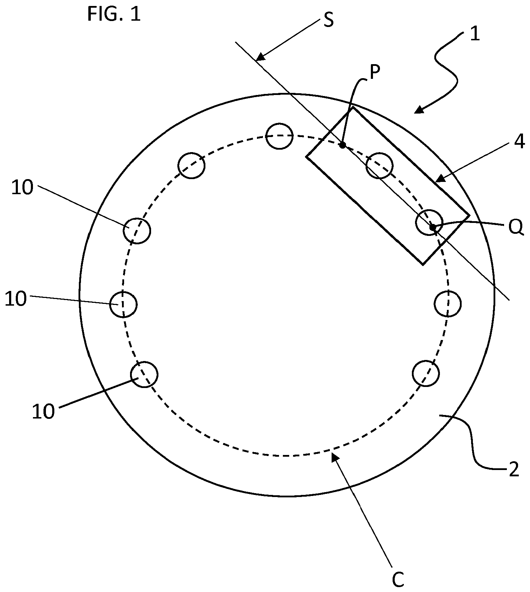

- figure 1 illustrates a decontaminating unit for decontaminating parisons made of a thermoplastic material, according to the present invention, in plan view;
- figure 2 illustrates a detail (pulsed light generating device) of the decontaminating unit of figure 1, in perspective view;

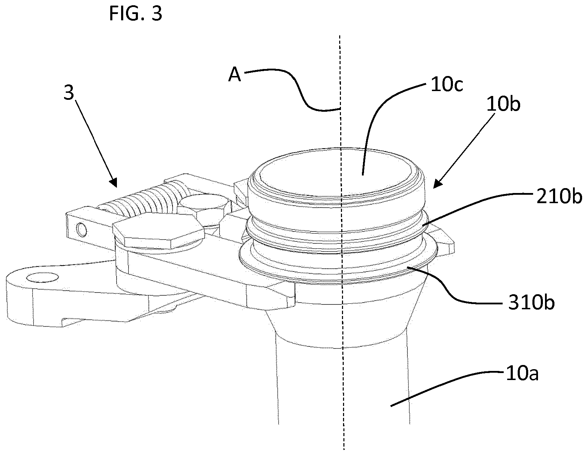

- figure 3 illustrates a detail (gripping means acting on a parison) of the decontaminating unit of figure 1, in perspective view;

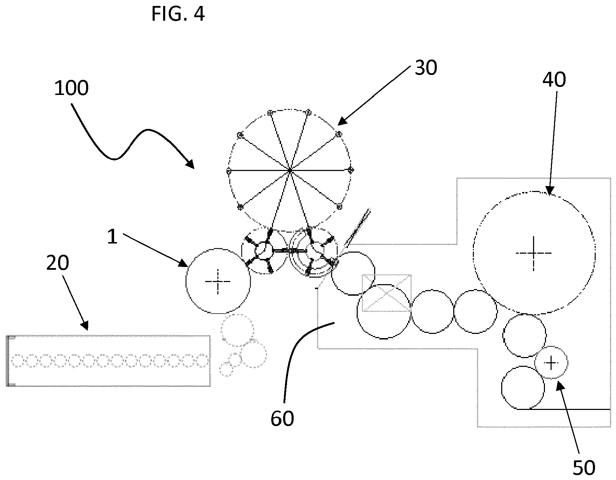

- figure 4 illustrates a moulding apparatus for moulding containers starting from parisons made of a thermoplastic material, according to the present invention, in a schematic plan view.

With reference to the figures, 1 indicates a decontaminating unit for decontaminating parisons 10 made of a thermoplastic material.

Each parison 10 comprises a tubular body 10a and a neck 10b that does not undergo the process.

The neck 10b, which surrounds a mouth 10c of the parison 10, has a threaded zone 210b and a finish 310b.

In this context, the technical term "finish" relates to a circumferential protuberance of the neck 10b extending following the threaded zone 210b.

The decontaminating unit 1 comprises a rotary carousel or turntable 2 for the rotary transport of the parisons 10 along a circumferential pathway C.

Every parison 10 advances maintaining the axis of symmetry A orthogonal to the rotary carousel 2. In this context, the expression "circumferential pathway" means the pathway described by the axis of symmetry A of each parison 10 during the movement of the rotary carousel 2.

During the advancement, the parisons 10 may be straight (i.e. with their mouth 10c facing upwards) or overturned (i.e. with their mouth 10c facing downwards).

During their advancement along the circumferential pathway C the parisons 10 are supported by gripping means 3 solidly constrained to the rotary carousel 2.

In particular, the gripping means 3 is operatively active only on a predefined zone of the neck 10b of the parisons 10.

The decontaminating unit 1 comprises a generating device for generating pulsed light 4 arranged along a secant S to said circumferential pathway C in order to send radiations onto the mouth 10c of the parisons 10 in transit. A secant S means a straight line that intersects in two points P, Q the circumferential pathway C.

The generating unit for generating pulsed light 4 comprises at least a pulsed light lamp arranged in such a way as to send radiations towards the mouth 10c of the parisons 10.

According to the orientation of the parisons 10, the generating unit for generating pulsed light 4 may assume different positions. For example, if the parisons 10 are straight the generating unit for generating pulsed light 4 is located above their mouths 10c, vice versa if the parisons 10 are overturned the generating unit for generating pulsed light 4 is located below the mouths 10c.

In particular, the generating unit for generating pulsed light is arranged so that the radiations hit both the inside of the parison 10 and the outside of the neck 10b up to and including the finish 310b.

Preferably, the generating unit for generating pulsed light 4 is stationary, i.e. immovable with respect to the rotary carousel 2 and, with respect to the mouth 10c of the parison 10 to be treated (therefore above or below, according to the orientation of the parison 10), it is at a pre-established distance such as to prevent mechanical interference.

In fact, the closer the generating unit for generating pulsed light 4 to the parison 10 to be treated, the greater the effectiveness of the treatment.

For example, the pulsed light lamp is characterised by the following parameters:
- voltages from 2 kV to 3 kV
- frequencies from 4 Hz to 10 Hz
- filling with noble gas (e.g. Argon or Xenon)
- flash time less than 1 msec.

Preferably, the decontaminating unit 1 comprises air filtering means operatively active at the mouth 10c of the parisons 10. Such filtering means (not shown) has the purpose of flushing with air the zone around the mouth 10c, which will be treated with pulsed light. For example, the filtering means comprises HEPA filters.

The gripping means 3 comprises pliers (known in themselves, therefore not further described) operatively active on the predefined zone of the neck 10b of the parisons 10. For example, the predefined zone of the neck 10b extends in proximity to the finish 310b.

Alternatively, the gripping means 3 comprises cells, i.e. through cavities, fashioned in the rotary carousel 2 for housing the parisons 10.

In this case, the parisons 10 are straight and abut with the finish 310b on the rotary carousel 2, therefore their neck 10b emerges from the cells and is easily treatable by the radiation coming from the pulsed light lamp.

Also the structure of the rotary carousel 2 with cells is well known and shall not be described further.

It is specified that the use of backing plates to support the parisons 10 is not suitable since, penetrating partially into the tubular body 10a of the parisons 10, they would create an obstacle to the radiation.

The pulsed light lamp is housed in a box container 6 provided with a slit 7 having a prevalent extension that is parallel to the secant S and orthogonal to the axis of symmetry A of the moving parisons 10.

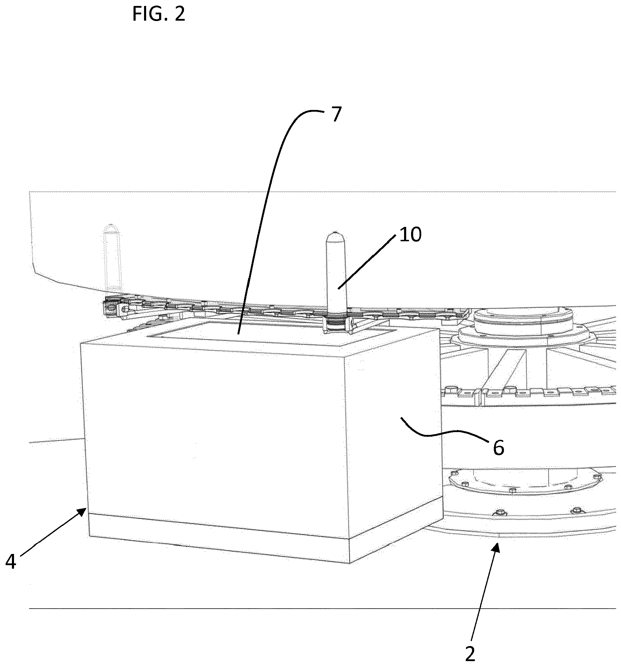

For example, if the parisons 10 are straight the slit 7 is above their mouths 10c, vice versa if the parisons 10 are overturned the slit 7 is located below the mouths 10c (as shown in figure 2).

Preferably, the box container 6 contains two pulsed light lamps.

Preferably, a reflecting element is also housed in the box container 6, which has the purpose of reflecting the radiations, while the box container 6 prevents their dispersion (as well as having a safety function).

Number 100 indicates a moulding apparatus for moulding containers, comprising:
- a heating unit 20 for heating parisons 10;
- the decontaminating unit 1 for decontaminating the parisons 10, having the characteristics described above;
- a stretch-blowing unit 30 for stretch-blowing the parisons 10 heated and decontaminated.

The decontaminating unit 1 is interposed between the heating unit 20 and the stretch-blowing unit 30 so as to obtain a synergistic effect of the pulsed light on the hot parisons 10. In fact, decontamination with pulsed light is more effective when performed on hot parisons 10. Furthermore, the parisons 10 are delivered to the stretch-blowing unit 30 straight after the successful decontamination.

The operation of the moulding apparatus for moulding containers starting from parisons made of plastic material is explained below.

The parisons 10, straight or overturned, are supplied to the heating unit 20 inside which they are heated so as to reach a predefined thermal profile.

The heated parisons 10 then reach the decontaminating unit 1.

During the movement of the rotary carousel 2, the parisons 10 - supported by the gripping means 3 - advance maintaining an orthogonal axis of symmetry A to the rotary carousel 2 itself.

During the advancement, the parisons 10 arrive with their mouths 10c in proximity to the generating device for generating pulsed light 4 and receive the radiations inside and in the outside zone of the neck 10b up to and including the finish 310b.

Each parison 10 receives two flashes coming from the slit 7 of the generating device for generating pulsed light 4 arranged along the secant S to the circumferential pathway C.

The decontaminated parisons 10 are then yielded to the stretch-blowing unit 30.

For example, the moulding of the parisons 10 takes place by blowing filtered air or sterile air.

Alternatively, the moulding of the parisons 10 takes place by blowing plasma at a higher pressure than atmospheric pressure or by generating plasma directly into the parisons 10 through the application of a difference in potential in the internal cavity of the moulds. Solutions using plasma have the advantage of moulding and simultaneously sterilising the parisons 10 and, possibly, the blown air circuit.

By using plasma rather than a blowing fluid, the parison 3 is also decontaminated.

At the end of the moulding step, the containers are sent to a filler 40 and subsequently to a capper 50. In this pathway, the containers are moved within a controlled contamination environment 60.

From the description given, the characteristics of the decontaminating unit for decontaminating parisons made of a thermoplastic material and moulding apparatus for moulding containers starting from parisons made of a thermoplastic material, according to the present invention, emerge clearly, as do the advantages.

In particular, the location of the pulsed light generating device along the secant of the circumferential pathway allows each parison to receive two flashes by the same lamp (or group of lamps) at a closer distance during the transit on the rotary carousel.

From experimental data, two flashes are essential for obtaining compatible decontaminating performance with ESL applications.

Furthermore, the location of the pulsed light generating device along the secant allows two flashes to be obtained with a single device, saving on overall costs (including those for maintenance / replacement of lamps).

Furthermore, the pulsed light sends radiations towards the mouth of the parison, hence enabling both the inside of the parison and the outside surface of the neck to be decontaminated (e.g. up to and including the finish).

The decontaminating unit is structurally simpler with respect to the known solutions since the pulsed light generating device is stationary and external to the parisons.

Treatment with pulsed light is particularly effective since the lamp is placed in proximity to the mouth of the parison below / above.

Furthermore, the presence of the reflecting element in the pulsed light generating device allows the radiations to be concentrated and the effectiveness of the treatment to be increased, preventing the formation of any shaded zones (i.e. zones not reached by the radiation).

The use of pulsed light on hot parisons also has a synergistic effect that improves the decontaminating performance.

## Claims

1. Decontaminating unit (1) for decontaminating parisons (10) made of a thermoplastic material, comprising:
a rotary carousel (2);
gripping means (3) for gripping said parisons (10), said gripping means (3) being solidly constrained to the rotary carousel (2) and being arranged such as to support the parisons (10) during their advancement thereof along a circumferential pathway (C) on said rotary carousel (2);
a generating device for generating pulsed light (4),
**characterised in that** said generating device for generating pulsed light (4) is arranged along a secant (S), that is a straight line that intersects in two points (P, Q) said circumferential pathway (C), in order to send radiations onto the mouth (10c) of the parisons (10) in transit.

2. Decontaminating unit (1) according to claim 1, wherein said generating device for generating pulsed light (4) comprises at least a pulsed light lamp arranged in such a way as to send radiations towards the mouth (10c) of the parisons (10).

3. Decontaminating unit (1) according to claim 2, wherein said generating device for generating pulsed light (4) comprises a box container (6) for housing said at least a pulsed light lamp, said box container (6) being provided with a slit (7) having a prevalent extension that is parallel to said secant (S).

4. Decontaminating unit (1) according to claim 3, wherein said generating device for generating pulsed light (4) further comprises a reflecting element located inside the box container (6).

5. Decontaminating unit (1) according to any one of the preceding claims, wherein said gripping means (3) are operatively active only on a predefined zone of the neck (10b) of the parisons (10).

6. Decontaminating unit (1) according to any one of the preceding claims, wherein said gripping means (3) comprise pliers operatively active on said predefined zone of the neck (10b) of the parisons (10).

7. Decontaminating unit (1) according to claims from 1 to 5, wherein said gripping means (3) comprise housing cells for housing said parisons (10), said housing cells being obtained in said rotary carousel (2).

8. Decontaminating unit (1) according to any one of the preceding claims, further comprising air filtering means operatively active at the mouth (10c) of said parisons (10).

9. Molding apparatus (100) for molding containers starting from parisons (10) made of a thermoplastic material, comprising:
a heating unit (20) for heating parisons (10);
a stretch-blowing unit (30) for stretch-blowing the parisons (10),
**characterised in that** it comprises a decontaminating unit (1) for decontaminating the parisons (10) according to any one of the preceding claims, said decontaminating unit (1) being interposed between said heating unit (20) and said stretch-blowing unit (30).

## Patentansprüche

1. Dekontaminationseinheit (1) für Vorformlinge (10) aus einem thermoplastischen Material, umfassend:
ein Drehkarussell (2);
Greifmittel (3) zum Greifen der Vorformlinge (10), wobei die Greifmittel (3) fest mit dem Drehkarussell (2) verbunden und so angeordnet sind, dass sie die Vorformlinge (10) während ihres Vorschubs entlang einer Umfangsbahn (C) auf dem Drehkarussell (2) stützen;
eine Erzeugungsvorrichtung zum Erzeugen von Impulslicht (4),
**dadurch gekennzeichnet, dass** die Erzeugungsvorrichtung zum Erzeugen von Impulslicht (4) entlang einer Sekante (S) angeordnet ist, bei der es sich um eine gerade Linie handelt, die die Umfangsbahn (C) an zwei Punkten (P, Q) schneidet, um Strahlungen auf die Öffnung (10c) der durchlaufenden Vorformlinge (10) zu senden.

2. Dekontaminationseinheit (1) nach Anspruch 1, wobei die Erzeugungsvorrichtung zum Erzeugen von Impulslicht (4) mindestens eine Impulslichtleuchte umfasst, die so angeordnet ist, dass Strahlungen zur Öffnung (10c) der Vorformlinge (10) gesendet werden.

3. Dekontaminationseinheit (1) nach Anspruch 2, wobei die Erzeugungsvorrichtung zum Erzeugen von Impulslicht (4) einen Kastenbehälter (6) zur Aufnahme der mindestens einen Impulslichtleuchte umfasst, wobei der Kastenbehälter (6) mit einem Schlitz (7) versehen ist, aufweisend eine vorwiegende Ausdehnung, die parallel zur Sekante (S) angeordnet ist.

4. Dekontaminationseinheit (1) nach Anspruch 3, wobei die Erzeugungsvorrichtung zum Erzeugen von Impulslicht (4) zudem ein reflektierendes Element enthält, das im Kastenbehälter (6) befindlich ist.

5. Dekontaminationseinheit (1) nach einem der vorhergehenden Ansprüche, wobei die Greifmittel (3) betriebswirksam nur auf eine vorgegebene Zone des Halses (10b) der Vorformlinge (10) wirken.

6. Dekontaminationseinheit (1) nach einem der vorhergehenden Ansprüche, wobei die Greifmittel (3) Zangen umfassen, die betriebswirksam auf die vorgegebene Zone des Halses (10b) der Vorformlinge (10) wirken.

7. Dekontaminationseinheit (1) nach Anspruch 1 bis 5, wobei die Greifmittel (3) Aufnahmezellen zur Aufnahme der Vorformlinge (10) umfassen, wobei die Aufnahmezellen im Drehkarussell (2) ausgebildet sind.

8. Dekontaminationseinheit (1) nach einem der vorhergehenden Ansprüche, zudem umfassend Luftfiltermittel, die betriebswirksam an der Öffnung (10c) der Vorformlinge (10) wirken.

9. Formgerät (100) zum Formen von Behältern aus Vorformlingen (10) aus einem thermoplastischen Material, umfassend:
eine Heizeinheit (20) zum Erwärmen von Vorformlingen (10);
eine Streckblaseinheit (30) zum Streckblasen der Vorformlinge (10),
**dadurch gekennzeichnet, dass** es eine Dekontaminationseinheit (1) für Vorformlinge (10) nach einem der vorhergehenden Ansprüche umfasst,
wobei die Dekontaminationseinheit (1) zwischen der Heizeinheit (20) und der Streckblaseinheit (30) eingesetzt ist.

## Revendications

1. Unité de décontamination (1) servant à la décontamination de préformes (10) en matière thermoplastique, comprenant :
un carrousel rotatif (2) ;
des moyens de préhension (3) servant à saisir lesdites préformes (10), lesdits moyens de préhension (3) étant solidement fixés au carrousel rotatif (2) et étant disposés de manière à supporter les préformes (10) pendant leur progression le long d'un parcours circonférentiel (C) sur ledit carrousel rotatif (2) ;
un dispositif de génération servant à générer de la lumière pulsée (4),
**caractérisée en ce que** ledit dispositif de génération servant à générer la lumière pulsée (4) est disposé le long d'une sécante (S), c'est-à-dire une ligne droite qui coupe en deux points (P, Q) ledit parcours circonférentiel (C), afin d'envoyer des rayonnements sur l'embouchure (10c) des préformes (10) en transit.

2. Unité de décontamination (1) selon la revendication 1, dans laquelle ledit dispositif de génération servant à générer la lumière pulsée (4) comprend au moins une lampe à lumière pulsée disposée de manière à envoyer des rayonnements vers l'embouchure (10c) des préformes (10).

3. Unité de décontamination (1) selon la revendication 2, dans laquelle ledit dispositif de génération servant à générer la lumière pulsée (4) comprend un récipient (6) en forme de boîte servant à loger ladite au moins une lampe à lumière puisée, ledit récipient (6) en forme de boîte étant pourvu d'une fente (7) ayant une extension principale étant parallèle à ladite sécante (S).

4. Unité de décontamination (1) selon la revendication 3, dans laquelle ledit dispositif de génération servant à générer la lumière pulsée (4) comprend de plus un élément réfléchissant situé à l'intérieur du récipient (6) en forme de boîte.

5. Unité de décontamination (1) selon l'une quelconque des revendications précédentes, dans laquelle lesdits moyens de préhension (3) sont fonctionnellement actifs uniquement sur une zone prédéfinie du col (10b) des préformes (10).

6. Unité de décontamination (1) selon l'une quelconque des revendications précédentes, dans laquelle lesdits moyens de préhension (3) comprennent une pince fonctionnellement active sur ladite zone prédéfinie du col (10b) des préformes (10).

7. Unité de décontamination (1) selon les revendications de 1 à 5, dans laquelle lesdits moyens de préhension (3) comprennent des cellules de logement servant à loger lesdites préformes (10), lesdites cellules de logement étant obtenues dans ledit carrousel rotatif (2).

8. Unité de décontamination (1) selon l'une quelconque des revendications précédentes, comprenant de plus des moyens de filtrage d'air fonctionnellement actifs en correspondance de l'embouchure (10c) desdites préformes (10).

9. Appareil de moulage (100) servant à mouler des récipients à partir de préformes (10) en matière thermoplastique, comprenant :
une unité de chauffage (20) servant à chauffer les préformes (10) ;
une unité d'étirage-soufflage (30) servant à étirer-souffler des préformes (10),
**caractérisé en ce qu'**il comprend une unité de décontamination (1) servant à la décontamination des préformes (10) selon l'une quelconque des revendications précédentes, ladite unité de décontamination (1) étant interposée entre ladite unité de chauffage (20) et ladite unité d'étirage-soufflage (30).
